# EUROPEAN PATENT SPECIFICATION

(11) **EP 1 142 668 B1**
(45) Date of publication and mention of the grant of the patent: **13.10.2004**
(21) Application number: 01830220.8
(22) Date of filing: 29.03.2001
(51) Int. Cl.: B23Q 3/12, B23B 31/107

(54) **Spindle for tools**
Spindel für Werkzeuge
Broche pour outils

(30) Priority: 07.04.2000 IT BO20000200
(43) Date of publication of application: 10.10.2001
(73) Proprietor: SCM GROUP S.p.A., 47900 Rimini (IT)
(72) Inventor: Meneghetti, Giovanni, 36030 Caldogno (Vicenza) (IT)
(74) Representative: Lanzoni, Luciano

(56) References cited:
- EP-A- 0 472 917
- FR-A- 2 562 179

## Description

The present invention relates to a spindle for tools, in particular a spindle for machine tools or centres for machining wood panels or the like.

In the aforementioned machine tools or in work centres (such as pantographs) multiple movable operative units are used, each comprising a spindle for housing and actuating in rotation a work tool, interchangeable with the aid of units for rapidly changing the tool.

Currently, electrical spindles (we refer to this solution which is generally used) are constituted by an outer body provided with an inner rotating shaft whereon is obtained a conical seat for the stable housing of a hold provided with the work tool.

The rotating shaft is axially hollow to house a connecting rod, axially sliding, for securing and releasing the hold from the seat. This rod is slaved to control means, usually pneumatic, in such a way as to slide between a raised position that allows to maintain the link between hold and related shaft, and a lowered position where the aforesaid elements can be released. These positions determine the opening or closure of a pliers assembly present at the end of the rod, which allows the securing or releasing on the end, appropriately shaped, of the hold.

This type of solution, which has been in use for long, is extremely practical and reliable (also for the rapid changing of the tools), but it entails some drawbacks given by a fairly large size of the spindle to house all assemblies destined to the transmission of motion to the shaft which, in current machines or work centres with multiple operative spindles, may not always be available. In addition, there could be performance limitations in the terms of the speeds of the tools, given the ample diameters of the rotating shaft which must also contain the rod and the hold grip and release assemblies.

To try to reduce the size of the spindle and improve tool performance, a solution is known in which the hold has a through axial seat, provided with appropriate means for the rotational support of the tool, in order to allow a direct connection of the tool to means for rotating the spindle (with the hold housed) constituted by a motor driven shaft.

The hold is stably secured to the body of the spindle, with no possibility to rotate, thanks to an assembly for gripping and releasing the hold.

This assembly for gripping and releasing the hold comprises three retaining elements (in practice, hooks), secured on the body of the spindle in proximity to the end seat for housing the hold; these retaining elements are uniformly distributed along the circumference of the seat (in practice about 120° from each other). These elements can rotate between a position removed from the hold (release position), and a position close to the hold (grip position). These motions are obtained by means of a double action cylinder, encompassing the spindle body and able to slide axially in the two directions, provided with pivots for controlling the related hooks: in practice the position assumed by the pivot pins allows, through the contact on a respective surface of the hooks, the hold grip or release position.

While this solution is an improvement over the previous one in terms of the transmission of motion (direct shaft - tool connection) nonetheless entails drawbacks given by the few grip points between spindle and hold which may be insufficient for the forces at play during the operative phases, by a large size deriving from the necessary connections, obtained with conduits for the pressurised fluid, for operating the outer cylinder and by the need to provide an appropriate hold with a circumferential throat for housing the hooks.

The aim of the present invention therefore is to eliminate the aforementioned drawbacks by providing a tool spindle having a high performance for the mounted tools, combined with a high degree of security of the spindle - hold - tool couplings in any operative situation, whilst maintaining a high speed in the grip and release of the holds when they are changed automatically.

According to the present invention, a spindle for tools for machining wood panels or the like in related work centres is provided, comprising a containment body for a motorised shaft able to be connected to a tool housed, able to rotate, in a related hold; the hold can be coupled in a related seat obtained at an end of the body, and lockable therein, with no possibility to rotate, through related grip and release means positioned and defining the end of the containment body and the housing seat for the hold; these means comprise a first cylindrical element encompassing a portion of the hold; a plurality of spherical bodies for securing the hold, uniformly distributed along its circumference, and able to be interposed between the hold and a second abutting cylindrical element, and means for supporting the two cylindrical elements and for axially actuating, in the two directions, the first cylindrical element between a rear operative position for gripping the hold, and an advanced operative position for releasing the hold in correspondence with a simultaneous radial actuation of the plurality of spherical bodies away from the portion of hold through an inclined profile obtained on the inner surface of the second cylindrical element.

The technical features of the invention, according to the aforesaid aims, can be clearly noted from the content of the claims set out below and its advantages shall become more readily apparent in the detailed description that follows, made with reference to the accompanying drawings, which show an embodiment provided purely by way of non limiting example, in which:
- Figure 1 shows a spindle for tools for machining wooden panels, in accordance with the present invention, in a lateral view with some parts removed the better to highlight others;
- Figure 2 shows the spindle of Figure 1 in a partial longitudinal section and with a hold and tool housed in the same spindle.

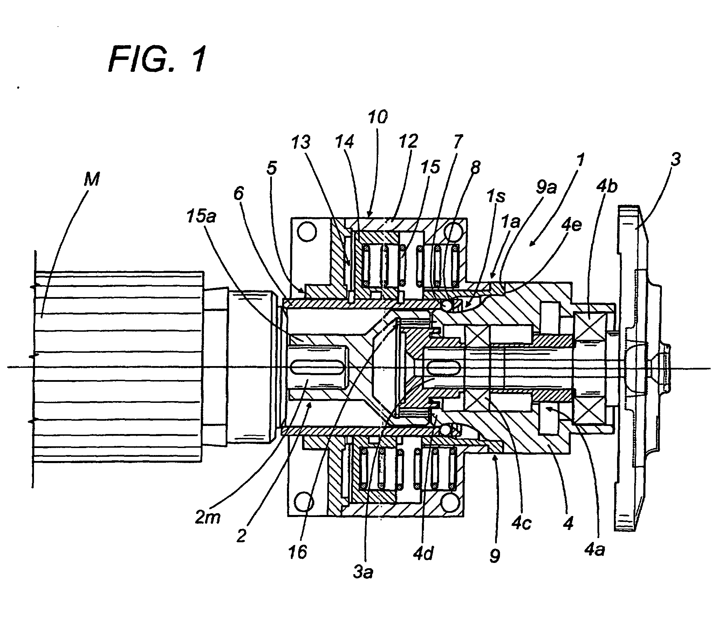

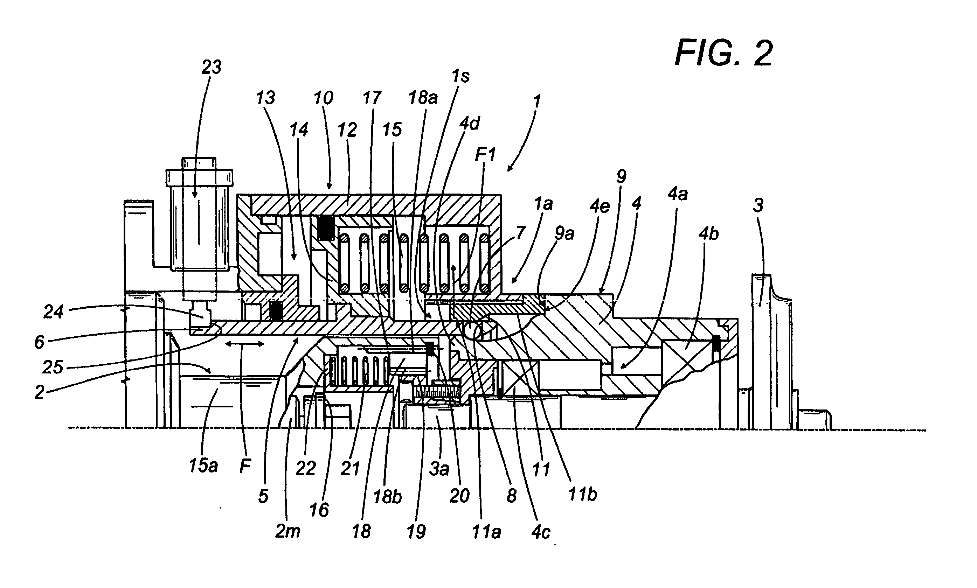

In accordance with the figures of the accompanying drawings, and with particular reference to Figures 1 and 2, the subject spindle for tools is used, in particular on machines and/or centres for machining wood panels or the like.

This spindle, globally indicated with the reference number 1, essentially comprises a containment body for a motorised shaft 2 (which will be described better farther on), developing axially in the body, and able to be connected to a tool 3 (which can be of different types according to the operative requirements of the machine), which tool 3 is housed, able to rotate, in a related hold 4.

This hold 4, in the case at hand, is provided with a through axial seat 4a and with related bearings 4b, 4c for the rotation of the tool 3. The hold 4 can be coupled in a related seat 1s obtained at an end 1a of the body, and lockable there, with no possibility to rotate, by related grip and release means 5.

The grip and release of the hold 4 take place in correspondence with an end 4d of the hold 4 appropriately shaped with a bulge serving as a grip area for the aforementioned means 5.

As Figures 1 and 2 clearly show, the aforesaid grip and release means 5 are positioned and define the aforesaid end 1a of the containment body and the seat 1 housing the hold 4. More specifically, in the case shown herein and purely by way of example, said grip and release means 5 constitute the body of the spindle 1, obviously excluding the motorising part of the motorised shaft 2.

More in detail, the grip and release means 5 comprise: a first cylindrical element 6 encompassing a portion of the hold 4; a plurality of spherical bodies 7 securing the hold 4, interposed between the hold 4 and a second abutting cylindrical element 9, and means 10 for supporting two cylindrical elements 6 and 9 and for actuating the first cylindrical element 6 to allow positions for gripping and releasing the hold 4.

The first cylindrical element 6 is internally hollow to allow, in its interior, the passage of the motorised shaft 2 and is further provided with a plurality of seats 8 for housing the corresponding spherical bodies 7, which are uniformly distributed along the circumference of the first cylindrical element 6, in such a way as to allow the interposition of the aforesaid spherical bodies 7 between the hold 4 and the second abutting cylindrical element 9.

The aforesaid means 10 allow an axial actuation, in the two direction (see arrow F in Figure 2), of the first cylindrical element 6 between a rear operative position for gripping the hold 4 (shown in Figures 1 and 2), and an advanced operative position for gripping the hold 4 in correspondence with a simultaneous radial actuation of the plurality of spherical bodies 7 away from the hold portion 4 (see arrow F1 of Figure 2) thanks to an inclined profile 11 obtained on the inner surface of the second cylindrical element 9.

This second cylindrical element 9 is stably associated to the aforesaid support and actuation means 10 and has the aforesaid inclined inner profile 11, joining the two rectilinear surfaces 11a and 11b with different diameters, able to define the translation area for the plurality of spherical bodies 7 in correspondence with the shift from the rear grip position to the advanced position of release of the hold 4.

The second cylindrical element 9 also serves as a reference for the housing of the hold 4, since is has a projecting part 9a able to define a positioning abutment for the hold 4 provided with a related checking surface 4e.

The aforesaid support and actuation means 10 comprise an outer cylindrical body 12 defining a chamber 13 for the passage of fluid encompassing the first cylindrical element 6 and, partially, the aforesaid second cylindrical element 9, which is stably associated to the cylindrical body 12.

In the aforesaid passage chamber 13 is located an annular piston 14 for guiding and actuating the first cylindrical element 6 to allow, upon the command of external means (not shown herein) for the inflow of fluid into the chamber 13, the rear operative grip position and, respectively, the advanced position for the release of the hold 4.

Figure 2 shows that the annular piston 14 comprises spring means 15, interposed between the piston 14 and a wall of said cylindrical body 12, able to allow the return of the first cylindrical element 6 always in the aforesaid rear operative position in the absence of fluid: in practice the means 10 are a single action cylinder defining the main body of the spindle 1, together with the two cylindrical elements 6 and 9 defining the housing seat of the hold 4.

Still observing Figure 2, the motorised shaft 2 comprises a driving shaft 2m connected to a motorization M (see also Figure 1) whereto is keyed a bell shaped body 15a for containing quick coupling means 16 acting between the shaft 3a of the aforesaid tool 3 and the driving shaft 2m.

The quick coupling means 16 comprise a toothed surface 17 obtained on the open end of the bell shaped body 15a and meshed with a first toothed profile 18a of a crown 18 with double toothed profile.

The crown 18 is bilaterally secured to the bell shaped body 15a and can be meshed, with its second profile 18b, to a toothed ring 19 rigidly associated to the inner end of the shaft 3a of the tool 3 in correspondence with the housing of the same tool 3, with hold 4, in the spindle 1.

The aforesaid crown 18 with double toothed profile is retained on the bell shaped body 15a, on one side, by an annular gasket 20 associated to the bell shaped body 15a and, on the other side, by a spring 21 interposed between the crown 18 and a bottom surface 22 of the bell shaped body 15a: in this way it is possible to obtain an axial sliding motion, in the two direction, and in particular in the direction of the same bottom of the bell shaped body 15a to avoid ruptures of the toothed profiles during the coupling with the shaft 3a of the tool 3.

The reference number 23 indicates, in Figure 2, sensor means for detecting the position of the first cylindrical element 6, associated to the outer cylindrical body 12, and able to allow at least the definition of a rear operative end of stroke position of the first cylindrical element 6.

In the illustrated case, purely by way of non limiting example, the sensor means 23 are of the mechanical type and comprise a checking pivot pin 24, positioned radially relative to the first cylindrical element 6, with an end wall 25 of the first cylindrical element 6.

In practice, therefore, the spindle 1 described above allows to house a hold 4 with tool 3 through the activation of the piston 14, with the inflow of fluid into the chamber 13, in such a way as to bring the first cylindrical element 6 to the aforesaid advanced release position. At this point the hold 4 with tool 3 can be housed in the seat 1s s defined by the two cylindrical elements 6 and 9 to the point in which the aforesaid bulge 4d of the hold 4 moves beyond the area in which the spherical bodies 7 on the first cylindrical element 6. Subsequently, air is vented from the chamber 13 in order to allow the backward move of the first cylindrical element 6 and related simultaneous grip of the spherical bodies 7 on the surface of the hold 4 until the hold 4 is completely housed, as also defined by the abutment between the hold 4 and the projecting end 9a of the second cylindrical element 9. This housing simultaneously allows the meshing between the motorised shaft 2 and the shaft 3a of the tool 3. The release of the hold 4, obviously, takes place re-admitting air into the chamber 13 to allow the advance of the first cylindrical element 6 which, consequently, leads to the move of the spherical bodies 7 away from the hold 4 exploiting the aforesaid inclined surface 11 of the second cylindrical body 9.

The spindle thus obtained therefore achieves the set aims, through an extremely simple and safe structure obtained with elements defining the base structure of the spindle, but, at the same time, having also functional purposes for the grip and release of the hold with tool.

The combination of elements, such as the two cylindrical elements and the actuating cylinder, serving a function as seats and support for the hold with tool in operative position and, simultaneously, a function of gripping and releasing the hold when the tool is changed quickly, causes the architecture of the whole spindle to be extremely light, small, but with extremely high operative efficiencies and with a high degree of safety thanks to a plurality of points defined by the spherical bodies.

## Claims

1. . A spindle for tools for machining wooden panels or the like in related work centres, said spindle (1) comprising a containment body for a motorised shaft (2), developing axially in said body, and able to be connected to a rotatable tool (3) housed in a related hold (4); said hold (4) being able to be coupled in a related seat (1s) obtained at an end (1a) of said body, and lockable there, with no possibility to rotate, with related grip and release means (5), **characterised in that** said grip and release means (5) are positioned in, and define, at least said end (1a) of said containment body and said seat (1s) for housing said hold (4), and comprise:
- a first cylindrical element (6) housing a portion of said hold (4);
- a plurality of spherical bodies (7) for securing said hold (4), housed in related seats (8) of said first cylindrical element (6), uniformly distributed along its circumference, and able to be interposed between said hold (4) and a second abutting cylindrical element (9);
- means (10) for supporting said first and second cylindrical element (6, 9) and for the axial actuation, in the two directions, of said first cylindrical element (6) between a rear operative position of grip of said hold (4), and an advanced operative position of release of the hold (4) in correspondence with a simultaneous radial actuation, of said plurality of spherical bodies (7) away from said portion of hold (4) through an inclined profile (11) obtained on the inner surface of said second cylindrical element (9).

2. A spindle as claimed in claim 1, **characterised in that** said first cylindrical element (6) is internally hollow to allow, within it, the passage of said motorised shaft (2).

3. A spindle as claimed in claims 1 and 2, **characterised in that** said second cylindrical element (9) is stably associated to said support and actuation means (10) and has said inclined inner profile (11), for joining the two rectilinear surfaces (11 a, 11 b) with different diameters, able to define a translation area for said plurality of spherical bodies (7) in correspondence with the shift from said rear grip position to said advanced position of release of said hold (4); said second cylindrical element (9) having a projecting part (9a) able to define a positioning abutment for said hold (4) provided with a related checking surface (4e).

4. A spindle as claimed in any of the previous claims, **characterised in that** said support and actuation means (10) comprise an outer cylindrical body (12) defining a chamber (13) for the passage of fluid encompassing said first cylindrical element (6) and, partially, said second cylindrical element (9) stably associated to the same cylindrical body (12); in said chamber (13) being located an annular piston (14) for guiding and actuating said first cylindrical element (6) able to allow said rear grip and, respectively, advanced release operative positions.

5. A spindle as claimed in claim 4, **characterised in that** said annular piston (14) comprises spring means (15), interposed between the piston (14) and a wall of said cylindrical body (12), able to allow to maintain said first cylindrical element (6) in said rear operative position.

6. A spindle as claimed in claim 1, **characterised in that** said motorised shaft (2) comprises a driving shaft (2m) whereto is keyed a bell shaped body (15a) for containing quick coupling means (16) acting between said shaft (3a) of said tool (3) and said driving shaft (2m).

7. A spindle as claimed in claims 1 and 6, **characterised in that** said quick coupling means (16) comprise a toothed surface (17) obtained on the open end of said bell shaped body (15a) and enmeshed with a first toothed profile (18a) of a crown (18) with double toothed profile bilaterally secured to said bell shaped body (15a); said toothed crown (18) being able to be meshed, with its second profile (18b), to a toothed ring (19) rigidly associated to the inner end of the shaft (3a) of said tool (3) in correspondence with the housing of the same tool (3) with said hold (4) in said spindle (1).

8. A spindle as claimed in claim 7, **characterised in that** said crown (18) with double toothed profile is retained on said bell shaped body (15a), on one side, by an annular gasket (20) associated to said bell shaped body (15a) and, on the other side, by a spring (21) interposed between said crown (18) and a bottom surface (22) of said bell shaped body (15a) in such a way as to allow an axial sliding motion in the direction of the bottom of said bell shaped body (15a).

9. A spindle as claimed in any of the claims from 1 to 5, **characterised in that** it comprises means (23) for sensing the position of said first cylindrical element (6), associated to said outer cylindrical body (12), and able to allow at least the definition of a rear operative end of stroke position of said first cylindrical element (6).

## Patentansprüche

1. Spindel für Werkzeuge für Maschinen zur Bearbeitung von Holzpaneelen oder ähnlichem in entsprechenden Arbeitszentren, wobei die genannte Spindel (1) einen Aufnahmekörper für eine angetriebene Achse (2) enthält, die sich axial in dem genannten Körper erstreckt und geeignet ist, an ein drehbares Werkzeug (3) angeschlossen zu werden, dass in einem entsprechenden Schaft (4) gehalten ist; wobei der genannte Schaft (4) in einem entsprechenden Sitz (1s) befestigt werden kann, erhalten an einem Ende (1a) des genannten Körpers und durch entsprechende Greif- und Freigabemittel (5) darin ohne die Möglichkeit des Drehens blockierbar, **dadurch gekennzeichnet, dass** die genannten Greif- und Freigabemittel (5) wenigstens in dem genannten Ende (1a) des genannten Aufnahmekörpers positioniert sind und dieses und den genannten Sitz (1s) zur Aufnahme des genannten Schaftes (4) beschreiben und wie folgt enthalten:
- ein erstes zylindrisches Element (6), welches einen Abschnitt des genannten Schaftes (4) aufnimmt;
- eine Anzahl von kugelförmigen Körpern (7) zum Sichern des genannten Schaftes (4), angeordnet in entsprechenden Sitzen (8) des genannten ersten zylindrischen Elementes (6), gleichmässig entlang von dessen Umfang verteilt und dazu bestimmt, sich zwischen den genannten Schaft (4) und ein zweites zylindrisches Anschlagelement (9) einzufügen;
- Mittel (10) zum Halten des ersten und zweiten zylindrischen Elementes (6, 9) und zum axialen Antrieb in beiden Richtungen des genannten ersten zylindrischen Elementes (6), und zwar zwischen einer zurückgezogenen Betriebsposition des Greifens des genannten Schaftes (4) und einer vorgeschobenen Betriebsposition der Freigabe des Schaftes (4) bei gleichzeitiger radialer Bewegung der genannten Anzahl von kugelförmigen Körpern (7) fort von dem genannten Abschnitt des Schaftes (4) mit Hilfe eines schrägen Profils (11), das an der inneren Oberfläche des genannten zweiten zylindrischen Elementes (9) erhalten ist.

2. Spindel nach Patentanspruch 1, **dadurch gekennzeichnet, dass** das genannte erste zylindrische Element (6) innen hohl ist, um das Durchführen der genannten angetriebenen Achse (2) zu erlauben.

3. Spindel nach den Patentansprüchen 1 und 2, **dadurch gekennzeichnet, dass** das genannte zweite zylindrische Element (9) stabil den genannten Halte- und Antriebsmitteln (10) zugeordnet ist und das genannte schräge interne Profil (11) aufweist, um die beiden geradlinigen Oberflächen (11a, 11b) von unterschiedlichen Durchmessern miteinander zu verbinden, in der Lage, einen Verschiebebereich für die genannte Anzahl von kugelförmigen Körpern (7) beim Verschieben aus der genannten zurückgezogenen Greifposition in die genannte vorgeschobene Freigabeposition des genannten Schaftes (4) zu beschreiben; wobei das genannte zweite zylindrische Element (9) einen hervorstehenden Teil (9a) hat, der einen Positionieranschlag für den genannten Schaft (4) bildet, welcher mit einer entsprechenden Anschlagfläche (4e) versehen ist.

4. Spindel nach einem beliebigen der vorstehenden Patentansprüche, **dadurch gekennzeichnet, dass** die genannten Halte- und Antriebsmittel (10) einen äusseren zylindrischen Körper (12) enthalten, der eine Kammer (13) für den Durchlauf von Flüssigkeit beschreibt, das genannte erste zylindrische Element (6) und teilweise das genannte zweite zylindrische Element (9) umgebend, das stabil mit dem zylindrischen Körper (12) selbst verbunden ist; wobei in der genannten Kammer (13) ein ringförmiger Kolben (14) zum Führen und Aktivieren des genannten ersten zylindrischen Elementes (6) angeordnet ist, welcher die genannte zurückgezogene Greif- beziehungsweise vorgeschobene Freigabeposition ermöglicht.

5. Spindel nach Patentanspruch 4, **dadurch gekennzeichnet, dass** der genannte ringförmige Kolben (14) Federmittel (15) enthält, eingesetzt zwischen dem Kolben (14) und einer Wand des genannten zylindrischen Körpers (12) und in der Lage, das genannte erste zylindrische Element (6) in der genannten zurückgezogenen Betriebsposition zu halten.

6. Spindel nach Patentanspruch 1, **dadurch gekennzeichnet, dass** die genannte angetriebene Achse (2) eine Antriebswelle (2m) enthält, auf welche ein glockenförmiger Körper (15a) zur Aufnahme von Schnellkupplungsnütteln (16) aufgekeilt ist, die zwischen der genannten Welle (3a) des genannten Werkzeugs (3) und der genannten Antriebswelle (2m) wirken.

7. Spindel nach den Patentansprüchen 1 und 6, **dadurch gekennzeichnet, dass** die genannten Schnellkupplungsmittel (16) eine verzahnte Oberfläche (17) enthalten, erhalten an dem offenen Ende des genannten glockenförmigen Körpers (15a) und im Eingriff mit einem verzahnten Profil (18a) eines Kranzes (18), der ein doppelt verzahntes Profil hat und beiderseitig an dem genannten glockenförmigen Körper (15a) gesichert ist; wobei der genannte verzahnte Kranz (18) in der Lage ist, mit seinem zweiten Profil ( 18b) an einem verzahnten Ring (19) in Eingriff gebracht zu werden, der starr mit dem inneren Ende der Welle (3a) des genannten Werkzeuges (3) verbunden ist, und zwar entsprechend der Aufnahme desselben Werkzeugs (3) mit dem genannten Schaft (4) in der genannten Spindel (1).

8. Spindel nach Patentanspruch 7, **dadurch gekennzeichnet, dass** der genannte Kranz (18) mit dem doppelt verzahnten Profil an dem glockenförmigen Körper (15a) gehalten wird, und zwar auf einer Seite durch eine ringförmige Dichtung (20), die dem genannten glockenförmigen Körper (15a) zugeordnet ist, und auf der anderen Seite durch eine Feder (21), eingesetzt zwischen dem genannten Kranz (18) und einer unteren Fläche (22) des genannten glockenförmigen Körpers (15a), und zwar auf solche Weise, dass eine axiale Gleitbewegung in Richtung des Bodens des genannten glockenförmigen Körpers (15a) erlaubt ist.

9. Spindel nach einem beliebigen der Patentansprüche von 1 bis 5, **dadurch gekennzeichnet, dass** sie Mittel (23) zum Erfassen der Position des genannten ersten zylindrischen Elementes (6) enthält, zugeordnet dem genannten äusseren zylindrischen Körper (12) und in der Lage, wenigstens eine betriebliche, zurückgezogene Anschlagposition des genannten ersten zylindrischen Elementes (6) zu festzulegen.

## Revendications

1. Une broche pour outils d'usinage de panneaux en bois ou similaires dans des centres d'usinage correspondants, ladite broche (1) comprenant un corps destiné à contenir un arbre motorisé (2) se développant axialement dans ledit corps et pouvant être relié à un outil rotatif (3) encastré dans un support correspondant (4) ; ledit support (4) pouvant être couplé dans un logement (1s) correspondant réalisé à une extrémité (1a) dudit corps, et pouvant y être bloqué, sans possibilité de rotation, par l'intermédiaire de moyens de prise et de relâche (5), ladite broche étant **caractérisée en ce que** lesdits moyens de prise et de relâche (5) sont positionnés dans, et définissent, au moins ladite extrémité (1a) dudit corps et ledit logement (1s) dudit support (4), et comprennent :
- un premier élément cylindrique (6) logeant une partie dudit support (4) ;
- une pluralité de corps sphériques (7) pour assujettir ledit support (4), logés dans des logements (8) correspondants dudit premier élément cylindrique (6), répartis uniformément sur sa circonférence et pouvant être intercalés entre ledit support (4) et un second élément cylindrique (9) de butée ;
- des moyens (10) de support desdits premier et second éléments cylindriques (6, 9) et d'actionnement axial, dans les deux sens, dudit premier élément cylindrique (6) entre une position opérationnelle rentrée de prise dudit support (4), et une position opérationnelle sortie de relâche du support (4) correspondant à un actionnement radial simultané de ladite pluralité de corps sphériques (7) qui éloigne ces derniers de la partie du support (4) par l'intermédiaire d'un profil incliné (11) réalisé sur la surface intérieure dudit second élément cylindrique (9).

2. Une broche selon la revendication 1, **caractérisée en ce que** ledit premier élément cylindrique (6) est intérieurement creux pour permettre, à l'intérieur de celui-ci, le passage dudit arbre motorisé (2).

3. Une broche selon les revendications 1 et 2, **caractérisée en ce que** ledit second élément cylindrique (9) est associé de façon stable aux dits moyens de support et d'actionnement (10) et comprend ledit profil intérieur incliné (11), de jonction des deux surfaces rectilignes (11a, 11b) de diamètre différent, pouvant définir une surface de translation pour ladite pluralité de corps sphériques (7) lors du passage de ladite position rentrée de prise à ladite position sortie de relâche dudit support (4) ; ledit second élément cylindrique (9) ayant une partie en saillie (9a) pouvant définir une butée de positionnement pour ledit support (4) qui est pourvu d'une surface de rencontre (4e) correspondante.

4. Une broche selon l'une quelconque des revendications précédentes, **caractérisée en ce que** lesdits moyens de support et d'actionnement (10) comprennent un corps cylindrique extérieur (12) définissant une chambre (13) pour le passage de fluide enveloppant ledit premier élément cylindrique (6) et, partiellement, ledit second élément cylindrique (9) associé de façon stable à ce même corps cylindrique (12) ; dans ladite chambre (13) étant situé un piston annulaire (14) pour guider et actionner ledit premier élément cylindrique (6) afin de permettre ladite position opérationnelle rentrée de prise et, respectivement, ladite position opérationnelle sortie de relâche.

5. Une broche selon la revendication 4, **caractérisée en ce que** ledit piston annulaire (14) comprend des moyens de ressort (15), interposés entre le piston (14) et une paroi dudit corps cylindrique (12), à même de maintenir ledit premier élément cylindrique (6) dans ladite position opérationnelle rentrée.

6. Une broche selon la revendication 1, **caractérisée en ce que** ledit arbre motorisé (2) comprend un arbre moteur (2m) sur lequel est calé un corps en forme de cloche (15a) destiné à contenir des moyens de couplage rapide (16) agissant entre ledit arbre (3a) dudit outil (3) et ledit arbre moteur (2m).

7. Une broche selon les revendications 1 et 6, **caractérisée en ce que** les moyens de couplage rapide (16) comprennent une surface dentée (17) réalisée sur l'extrémité ouverte dudit corps en forme de cloche (15a) et engrenée avec un premier profil denté (18a) d'une couronne (18) à double profil denté fixée des deux côtés audit corps en forme de cloche (15a) ; ladite couronne dentée (18) pouvant s'engrener, avec son second profil (18b), dans un anneau denté (19) associé rigidement à l'extrémité intérieure de l'arbre (3a) dudit outil (3) au niveau du logement de ce même outil (3) avec ledit support (4) dans ladite broche (1).

8. Une broche selon la revendication 7, **caractérisée en ce que** ladite couronne (18) à double profil denté est maintenue sur ledit corps en forme de cloche (15a), d'un côté, par une garniture annulaire (20) associée audit corps en forme de cloche (15a) et, de l'autre, par un ressort (21) interposé entre ladite couronne (18) et une surface inférieure (22) dudit corps en forme de cloche (15a) de manière à permettre un mouvement de glissement axial vers le bas dudit corps en forme de cloche (15a).

9. Une broche selon l'une quelconque des revendications de 1 à 5, **caractérisée en ce qu'**elle comprend des moyens (23) de détection de la position dudit premier élément cylindrique (6), associés audit corps cylindrique extérieur (12) et à même de définir au moins une position opérationnelle rentrée de fin de course dudit premier élément cylindrique (6).
